# EUROPÄISCHE PATENTSCHRIFT

(11) **EP 2 064 480 B1**
(45) Veröffentlichungstag und Bekanntmachung des Hinweises auf die Patenterteilung: **15.01.2014**
(21) Anmeldenummer: 07820001.1
(22) Anmeldetag: 31.08.2007
(51) Int. Cl.: F16P 3/14, G01S 13/56, B23Q 5/58

(54) **WERKZEUGMASCHINENÜBERWACHUNGSVORRICHTUNG**
MACHINE TOOL MONITORING DEVICE
DISPOSITIF DE SURVEILLANCE DE MACHINE-OUTIL

(30) Priorität: 04.09.2006 DE 102006041759; 22.08.2007 DE 102007039570
(43) Veröffentlichungstag der Anmeldung: 03.06.2009
(73) Patentinhaber: Robert Bosch GmbH, 70442 Stuttgart (DE)
(72) Erfinder: MAHLER, Michael, 70771 Leinfelden-Echterdingen (DE); KRAPF, Reiner, 72770 Reutlingen (DE); BRAUN, Heiko, 70771 Leinfelden-Echterdingen (DE); HEES, Alexander, Werner, 74321 Bietigheim-Bissingen (DE)
(86) Internationale Anmeldenummer: PCT/EP2007/059104
(87) Internationale Veröffentlichungsnummer: WO 2008/028868

(56) Entgegenhaltungen:
- EP-A- 1 422 022
- EP-A2- 1 233 231
- WO-A-94/24579
- WO-A-2007/054529
- US-A1- 2002 171 993
- US-A1- 2006 096 425
- US-A1- 2006 101 960
- ETSI ET AL: "Object discrimination and characterization applications operating in the frequency band 2,2 GHz to 8 GHz" ETSI STANDARDS, EUROPEAN TELECOMMUNICATIONS STANDARDS INSTITUTE, SOPHIA-ANTIPO, FR, Bd. DTRERM-RM, NR 44-2, Nr. v111, Mai 2006 (2006-05), XP002459104 ISSN: 0000-0001

## Beschreibung

### Stand der Technik

Die Erfindung geht aus von einer Werkzeugmaschinenüberwachungsvorrichtung nach dem Oberbegriff des Anspruchs 1.

Aus der DE 102 61 791 A1 ist eine Werkzeugmaschinenüberwachungsvorrichtung für eine Kreissäge bekannt. Diese weist eine Sensoreinheit zur Erzeugung und Erfassung eines elektromagnetischen Signals auf, welche in der Nähe eines Sägeblatts angeordnet ist. Ein Annähern eines Körperteils an das Sägeblatt kann durch eine Überwachung des Signalspektrums detektiert werden. Als Frequenzband für das Signal wird ein lizenzfreies Band gewählt.

Die gattungsbildende EP-A1- 1 422 022 offenbart ein Elektrowerkzeug, beispielsweise in Form einer Tischkreissäge, mit einer Sensorik, die verhindern soll, dass das Schneidwerkzeug, wie beispielsweise das Sägeblatt, in Kontakt mit einem anderen Objekt als dem zu schneidenden/sägenden Werkstück kommt. Auf diese Weise soll zum einen eine Beschädigung des Elektrowerkzeuges vermieden werden, zum anderen sollen Verletzungen des Bedieners des Elektrowerkzeuges verhindert werden. Die Vorrichtung der EP-A1- 1 422 022 besitzt dazu einen Detektor, insbesondere einen Radardetektor, der überwacht, ob ein Objekt einen vorbestimmten Abstand zum Arbeitsmittel (z.B. Sägeblatt) unterschreitet und dabei insbesondere eine vorgegebene Geschwindigkeit überschreitet. Auf diese Weise soll mit der Vorrichtung der EP-A1- 1 422 022 ein "Ausrutschen" der Hand eines Bedieners frühzeitig detektiert werden, so dass das Arbeitsgerät noch vor dem Kontakt eines Körperteils des Bedieners mit dem Sägeblatt abgeschaltet werden kann.

Das Dokument ETSI TR 102 495-2 "Technical Characteristics for Short Range Devices Equipment using Ultra Winde Band Sensor Technology" zeigt einen UWB Radarsensor im Bereich von 2,2 bis 8 GHz als Sicherheitssensor unter anderem für Werkzeugmaschinen, wie Tischkreissägen.

Aufgabe der Erfindung ist es eine verbesserte Werkzeugmaschinenüberwachungsvorrichtung vorzuschlagen.

Diese Aufgabe wird durch die Vorrichtung gemäß Anspruch 1 erfüllt.

### Vorteile der Erfindung

Die Erfindung geht aus von einer Werkzeugmaschinenüberwachungsvorrichtung. Die erfindungsgemäße Werkzeugmaschinenüberwachungsvorrichtung weist mindestens eine für einen Ultrabreitbandbetrieb vorgesehene Signaleinheit auf. Es kann mit einer Nutzung von ultrabreitbandigen Signalen eine hohe Informationsdichte und dadurch eine effektive Überwachung erreicht werden. Insbesondere können mehrere Arbeitsparameter bei einer Anwendung einer Werkzeugmaschine gleichzeitig überwacht werden, wodurch sichere und komfortable Arbeitsbedingungen erreichbar sind. Ferner kann eine besonders genaue Materialunterscheidung erreicht werden. Die Breitbandigkeit von Sendesignalen ermöglicht außerdem eine genaue Erfassung eines Abstands der Signaleinheit zu einem sich in einem überwachten Bereich befindenden Objekt. Die Ermittlung einer Werkstücksdimension, insbesondere einer Werkstückdicke, ist ebenfalls möglich. Unter einer "für einen Ultrabreitbandbetrieb vorgesehenen" Signaleinheit soll insbesondere eine Einheit verstanden werden, mittels der ein ultrabreitbandiges Signal erzeugt, empfangen und/oder ausgewertet werden kann. Unter einem "ultrabreitbandigen (oder Ultra Wide Band oder UWB) Signal" soll insbesondere ein Signal verstanden werden, welches ein Frequenzspektrum mit einer Mittenfrequenz und einer Frequenzbandbreite von zumindest 500 MHz aufweist. Die Mittenfrequenz ist vorzugsweise im Frequenzbereich von 1 GHz bis 15 GHz gewählt. Erfindungsgemäß weist die Signaleinheit mindestens einen Ultrabreitband-Radarsensor auf, wodurch insbesondere eine Platz sparende und unauffällige Anordnung der Signaleinheit erreicht werden können. Unter einem "Ultrabreitband-Radarsensor" soll in diesem Zusammenhang insbesondere ein Radarsensor verstanden werden, mittels dessen ein ultrabreitbandiges Radarsignal erzeugt, gesendet und/oder empfangen werden kann. Unter "vorgesehen" soll ferner insbesondere "ausgelegt", "ausgestattet" und/oder "programmiert" verstanden werden.

Erfindungsgemäß wird vorgeschlagen, dass die Signaleinheit über eine Listen-Before-Talk Funktion verfügt, wodurch eine gegenseitige Störung der Signaleinheit mit Fremddiensten vorteilhaft vermindert werden kann. Unter einer "Listen-Before-Talk Funktion" ist ein Betriebsmodus der Werkzeugmaschinenüberwachungsvorrichtung zu verstehen, in welchem der relevante Nutzfrequenzbereich der Signaleinheit nach Fremddiensten abgesucht wird. Insbesondere wird der Nutzfrequenzbereich nach Radio-, GSM-, UMTS- und/oder Flugradardiensten abgesucht.

Insbesondere ist die Signaleinheit als Erkennungseinheit zur Erkennung einer Anwendungssituation bei einer Werkzeugmaschine ausgebildet. In einer bevorzugten Ausführung der Erfindung wird vorgeschlagen, dass die Signaleinheit, insbesondere der Ultrabreitband-Radarsensor, zur Erkennung von menschlichem oder tierischem Gewebe in einem überwachten Bereich, vorzugsweise in einer einem angetriebenen Werkzeug der Werkzeugmaschine zugeordneten Gefahrenzone, vorgesehen ist, wodurch eine hohe Bediensicherheit bei der Anwendung der Werkzeugmaschine erreicht werden kann. Dies kann besonders zuverlässig durch die Auswertung eines ultrabreitbandigen Radarsignals erreicht werden, da ein derartiges Gewebe eine hohe Dämpfungswirkung in einem Frequenzbereich oberhalb von 2 GHz besitzt. Ferner weist die Werkzeugsmaschinenüberwachungsvorrichtung bevorzugterweise eine Aktorikeinheit zur Durchführung einer Sicherheitsmaßnahme auf, die mit der Signaleinheit in Wirkverbindung steht. Diese Aktorikeinheit ist insbesondere dazu vorgesehen, anhand eines Signals der Signaleinheit das Vorhandensein eines zu einer Bewegung angetriebenen Werkzeugs in der Gefahrenzone zu beseitigen. Hierbei kann unter dem "Beseitigen" ein Abschalten des Werkzeugantriebs oder das Verstellen des angetriebenen Werkzeugs aus der Gefahrenzone verstanden werden. Die "Gefahrenzone" setzt sich vorzugsweise aus Punkten zusammen, die einen kleinsten Abstand zum angetriebenen Werkzeug von maximal 5 cm, insbesondere maximal 2 cm aufweisen.

Eine besonders konstruktiv einfache Überwachung kann erzielt werden, wenn der mindestens eine Ultrabreitband-Radarsensor in einer Werkzeugmaschinengrundeinbaustellung unterhalb einer Werkzeugmaschinenarbeitsfläche zum Platzieren eines Werkstücks angeordnet ist. Unter einer "Werkzeugmaschinengrundeinbaustellung" soll in diesem Zusammenhang eine Stellung verstanden werden, die bei der Anwendung der Werkzeugmaschine durch einen Endbenutzer unter vorschriftsgemäßen Anwendungsbedingungen vorliegt.

Es kann eine gesteigerte Flexibilität in der Anwendung der Werkzeugmaschinenüberwachungsvorrichtung erreicht werden, wenn diese mindestens einen weiteren Sensor aufweist. Insbesondere wird vorgeschlagen, dass der mindestens eine weitere Sensor als Ultrabreitband-Radarsensor ausgebildet ist, wodurch eine vorteilhafte Komplementarität mit dem ersten Ultrabreitband-Radarsensor erreicht werden kann. Insbesondere kann durch einen zusätzlichen Ultrabreitband-Radarsensor eine erhöhte Aussagequalität über einen Materialzustand (wie z.B. einen Feuchtigkeitsgrad) eines Werkstücks und bei der Erkennung von menschlichem oder tierischem Gewebe erreicht werden.

Eine Komplementarität von zumindest zwei Sensorikarten kann vorteilhaft genutzt werden, wenn der mindestens eine weitere Sensor ein kapazitiver oder induktiver oder mechanischer oder optischer Sensor ist. Der mindestens eine weitere Sensor kann in diesem Zusammenhang besonders vorteilhaft zur Verhinderung einer Fehlauslösung einer mit der Signaleinheit verbundenen Aktorikeinheit ausgelegt sein. Beispielsweise kann der mindestens eine weitere Sensor als Bilderfassungseinheit, wie als Videokamera, ausgebildet sein oder zur Auswertung einer Temperaturkenngröße vorgesehen sein, wie z.B. bei einer Ausbildung als Infrarotsensor.

In einer weiteren Ausführung der Erfindung wird vorgeschlagen, dass der mindestens eine weitere Sensor in einer Werkzeugmaschinengrundeinbaustellung oberhalb einer Werkzeugmaschinenarbeitsfläche zum Platzieren eines Werkstücks angeordnet ist. Es kann hiermit ein großer Überwachungsbereich erreicht werden. Außerdem kann mit dieser Anordnung beim Bearbeiten eines aus Metall hergestellten Werkstücks eine vorteilhafte Überwachung erzielt werden, die herkömmlicherweise aufgrund der Undurchlässigkeit des Werkstücks für hochfrequente Signale beeinträchtigt ist. Ferner kann eine vorteilhafte Auswertung eines auf ein Werkstück reflektierten Signalanteils eines Sendesignals erreicht werden. Insbesondere kann ein auf das Werkstück reflektierter Signalanteil zu einer Materialerkennung vorteilhaft genutzt werden, wie z.B. anhand der Auswertung der Phasenlage des reflektierten Anteils relativ zum Sendesignal.

Ferner wird vorgeschlagen, dass der zumindest eine Ultrabreitband-Radarsensor und der mindestens eine weitere Sensor in einer Werkzeugmaschinengrundeinbaustellung beiderseits einer Werkzeugmaschinenarbeitsfläche zum Platzieren eines Werkstücks angeordnet sind, wodurch ein besonders großer Überwachungsbereich erreicht werden kann. Bei der Anordnung der Sensoren "beiderseits" der Werkzeugmaschinenarbeitsfläche sind die Sensoren vorzugsweise durch die Werkzeugmaschinenarbeitsfläche getrennt, wobei ein erster Sensor unterhalb und ein zweiter Sensor oberhalb der Werkzeugmaschinenarbeitsfläche angeordnet ist.

In einer vorteilhaften Weiterbildung der Erfindung wird vorgeschlagen, dass der zumindest eine Ultrabreitband-Radarsensor und der mindestens eine weitere Sensor ein Sensorsystem bilden, das zur Erfassung von zumindest zwei Signalanteilen ausgelegt ist, die aufgrund einer Wechselwirkung mit einem überwachten Objekt zwei unterschiedliche Strahlrichtungen aufweisen, wodurch die Zuverlässigkeit in der Überwachung vorteilhaft erhöht werden kann.

Insbesondere wird vorgeschlagen, dass der zumindest eine Ultrabreitband-Radarsensor und der mindestens eine weitere Sensor ein Sensorsystem bilden, das zur Erfassung eines Signalanteils, der durch ein zu bearbeitendes Werkstück transmittiert wird, und eines Signalanteils, der auf ein zu bearbeitendes Werkstück reflektiert wird, ausgelegt ist. Hierdurch kann ein besonders großer Überwachungsbereich - und damit eine hohe Sicherheit - erreicht werden.

In diesem Zusammenhang können die Flexibilität, die Zuverlässigkeit und der Bedienkomfort durch die Vermeidung von Fehlauslösungen von Sicherheitsmaßnahmen weiter gesteigert werden, wenn die Werkzeugmaschinenüberwachungsvorrichtung einen zu dem Sensorsystem zusätzlichen Sensor aufweist. Dieser Sensor kann ein kapazitiver oder induktiver oder mechanischer oder optischer Sensor sein oder es kann sich um einen weiteren Ultrabreitband-Radarsensor handeln.

Ferner können bestimmte Bereiche der Werkzeugmaschine, welche eine besonders Gefahr darstellen, gezielt mit einer hohen Signalintensität überwacht werden, wenn die Werkzeugmaschinenüberwachungsvorrichtung eine Einheit aufweist, die zum Bündeln einer Strahlung der Signaleinheit vorgesehen ist.

Außerdem wird vorgeschlagen, dass die Signaleinheit ein Mittel aufweist, das in zumindest einem Energiesparmodus ein Tastverhältnis für ein Sendesignal festlegt, wodurch ein Energieverbrauch und Störungen von weiteren Diensten vorteilhaft reduziert werden können. Unter einem "Tastverhältnis" soll bei der Sendung eines Sendesignals in einem zyklischen Vorgang, bei welchem das Sendesignal abwechselnd während einer ersten Zeitdauer mit einer Intensität und während einer zweiten Zeitdauer mit einer kleineren Intensität, insbesondere mit einer Nullintensität, gesendet wird, ein Verhältnis zwischen der ersten oder der zweiten Zeitdauer und der gesamten Zyklenperiode verstanden werden. Hierbei bilden die erste Zeitdauer und die zweite Zeitdauer die gesamte Zyklenperiode. Während der ersten bzw. der zweiten Zeitdauer kann das gesendete Signal selbst als periodisches Signal ausgebildet sein.

Es wird außerdem vorgeschlagen, dass die Signaleinheit zur Bearbeitung eines Signals vorgesehen ist, welches eine Folge von Pulsen aufweist. Dadurch können große Frequenzbandbreiten erreicht werden. Bei der Bearbeitung des Signals kann das Signal insbesondere erzeugt, empfangen und/oder ausgewertet werden. Unter einer "Folge" von Pulsen soll insbesondere eine Reihe von zeitlich aufeinander folgenden Pulsen verstanden werden. Ein Puls kann in einer Darstellung der Signalamplitude gegen die Zeit von einem bestimmten Muster gebildet sein, wie z.B. einem Rechteck, einem gaußschen Profil usw. Eine Pulsdauer bzw. eine die Übertragungszeit des Musters charakterisierende Größe ist vorzugsweise im Bereich von 0,1 ns (Nanosekunde) bis 2 ns gewählt. Innerhalb der Folge können die Pulse zeitlich regelmäßig aufeinander folgen, indem das Zeitintervall zwischen jeweils zwei direkt aufeinander folgenden Pulsen konstant ist. Alternativ können die Pulse zeitlich unregelmäßig aufeinander folgen. Das Zeitintervall zwischen zwei direkt aufeinander folgenden Pulsen kann dabei als Zufallsvariable ausgebildet sein. Beispielsweise kann die Folge als PN-Folge (Pseudo-Noise-Folge oder Pseudorauschfolge) ausgeführt sein.

Alternativ oder zusätzlich kann die Signaleinheit zur Bearbeitung eines Signals vorgesehen sein, das in der Frequenz moduliert ist, wie insbesondere eines FMCW-Signals (Frequency Modulated Continuous Wave oder frequenzmodulierte kontinuierliche Welle). Insbesondere wird vorgeschlagen, dass die Signaleinheit zur Erzeugung eines Signals mittels einer stufenweisen Frequenzmodulation vorgesehen ist. Unter einer "stufenweisen" Frequenzmodulation (oder auch "stepped frequency" genannt) soll eine Modulation des Signals verstanden werden, bei welcher, im Gegenteil zu einer kontinuierlichen Änderung der Frequenz, ausgehend von einem ersten Frequenzwert bis zu einem zweiten Frequenzwert die Frequenz des Signals stufenweise geändert wird. Hierzu ist zumindest ein Oszillator vorgesehen, bei welchem die Ausgangsfrequenz steuerbar ist. Der erste Frequenzwert und der zweite Frequenzwert spannen vorzugsweise einen ultrabreitbandigen Frequenzbereich.

Vorteilhafterweise umfasst die Signaleinheit eine Recheneinheit, die dazu vorgesehen ist, einem erfassten Signal eine Anwendungssituation durch eine auf einer unscharfen und/oder neuronalen Logik basierende Signalverarbeitung zuzuordnen. Mit Hilfe einer unscharfen Logik kann von der Recheneinheit anhand des erfassten Signals eine große und komplexe Informationsmenge schnell ausgewertet werden. Dadurch kann die Werkzeugmaschinenüberwachungsvorrichtung in kurzer Zeit auf Situationen reagieren, die für die Sicherheit eines Bedieners als kritisch erscheinen. Eine unscharfe Logik stellt insbesondere eine Logik dar, die dem Auftreten eines bestimmten Ereignisses einen Wahrscheinlichkeitswert im Intervall zwischen 0 (falsch) und 1 (wahr) zuordnet. Im Unterschied zu kapazitiven Sensoren kann dabei auf eine kritische Anwendungssituation reagiert werden, bevor ein physikalischer Kontakt zwischen dem Bediener und der Werkzeugmaschine entsteht. Durch eine neuronale Logik können vorteilhafte Selbstlernfunktionen der Werkzeugmaschinenüberwachungsvorrichtung erreicht werden.

In einer vorteilhaften Weiterbildung der Erfindung wird vorgeschlagen, dass die Signaleinheit eine Datenbank aufweist, in der einer Anwendungssituation zumindest ein Signalmuster zugeordnet ist. Es kann ein besonders schneller Erkennungsprozess einer Anwendungssituation vorteilhaft erreicht werden, indem eine Korrelation zwischen einem erfassten Signal und einem Signalmuster untersucht wird. Dabei kann eine auf einer unscharfen Logik basierende Korrelationsmethode vorteilhaft genutzt werden.

In einer weiteren Ausführungsform der Erfindung wird vorgeschlagen, dass die Signaleinheit eine programmierbare Datenbank aufweist, in der einer Anwendungssituation bei einem Bearbeitungsprozess ein Vorgehen zum Ändern des Bearbeitungsprozesses zugeordnet ist. Wenn eine bestimmte Anwendungssituation erkannt worden ist, kann dadurch in kurzer Zeit auf diese Anwendungssituation reagiert werden. Die Datenbank ist vorzugsweise im zusammengebauten Zustand einer Werkzeugmaschine und insbesondere durch einen Bediener dieser Werkzeugmaschine programmierbar. Dadurch können Werkeinstellungen der Datenbank vorteilhaft erweitert werden, z.B. wenn die Werkzeugmaschine von einem Bediener mit weiteren Werkzeugen oder weiterem Zubehör nachgerüstet wird.

Vorzugsweise ist die Signaleinheit zur Bestimmung eines Arbeitsfortschritts bei einer Werkstückbearbeitung vorgesehen. Dadurch kann ein hoher Bedienungskomfort bei der Anwendung einer Werkzeugmaschine erreicht werden. Vorteilhaft können verschiedene Arbeitsphasen bei einer Werkstückbearbeitung definiert werden, wobei ein Sicherheitsniveau bei der Überwachung der Werkstückbearbeitung an diese Arbeitsphasen angepasst wird.

Ist die Signaleinheit zur Bestimmung eines Abstands vorgesehen, kann bei einer Werkstückbearbeitung eine Position eines Werkzeugs oder des Werkstücks vorteilhaft überwacht werden. Es können z.B. anormale Positionen, z.B. bei einer Unwucht des Werkzeugs oder bei einem verkehrten Aufstellen eines Werkstücks, schnell erkannt werden. Zusätzlich kann eine Dimension eines Werkstücks bestimmt werden. Vorteilhaft kann ein Arbeitsfortschritt überwacht werden.

Vorzugsweise ist die Signaleinheit zur Bestimmung einer Geschwindigkeit eines zu bearbeitenden Werkstücks vorgesehen. Dadurch kann ein Arbeitsfortschritt vorteilhaft überwacht werden. Die Signaleinheit ist vorzugsweise zur Bestimmung einer Translations- und/oder Rotationsgeschwindigkeit des Werkstücks relativ zu einer statischen Einheit einer Werkzeugmaschine, wie z.B. einem Gehäuse, vorgesehen.

In diesem Zusammenhang wird vorgeschlagen, dass die Signaleinheit ein Mittel aufweist, das zum Bestimmen einer Geschwindigkeit eines Werkstücks und/oder eines Werkzeugs mittels der Auswertung einer Dopplerverschiebung eines durch die Signaleinheit erzeugten Signals vorgesehen ist. Hierdurch kann besonders präzise eine aktuelle Umdrehungsgeschwindigkeit eines Werkzeugs und/oder die Fortschrittsgeschwindigkeit eines Bearbeitungsvorgangs an einem Werkstück ermittelt werden.

In einer weiteren Ausführungsvariante der Erfindung weist die Werkzeugmaschinenüberwachungsvorrichtung eine elektronische Ausgabeeinheit auf, die zur Ausgabe einer Überwachungsinformation an einen Bediener vorgesehen ist, wodurch Sicherheit und Bedienungskomfort bei einer Anwendung weiter erhöht werden können. Die Ausgabeeinheit kann als Anzeiger, wie z.B. als LED- oder LCD-Display, ausgebildet sein. Alternativ oder zusätzlich kann die Ausgabeeinheit z.B. zur Ausgabe von einem akustischen Signal vorgesehen sein.

Weist die Werkzeugmaschinenüberwachungsvorrichtung eine elektronische Eingabeeinheit auf, die zur Eingabe von zumindest einer Überwachungsinformation vorgesehen ist, kann eine Konfiguration von Überwachungsfunktionen von einem Bediener komfortabel durchgeführt werden.

Weist die Werkzeugmaschinenüberwachungsvorrichtung eine Regelungseinheit auf, die zum Regeln von zumindest einem Parameter eines Werkstückbearbeitungsprozesses vorgesehen ist, kann eine Arbeitsqualität vorteilhaft gesteigert werden.

In einer weiteren Ausführungsvariante wird vorgeschlagen, dass die Signaleinheit in zumindest einem Betriebsmodus zur Auswertung von zumindest einer Strahlung aus einer Gruppe von zumindest zwei Strahlungsanteilen dient, die aufgrund einer Reflexion eines Signals an zumindest zwei Schnittstellen eines Mediums voneinander räumlich getrennt sind. Hierbei kann die Signaleinheit insbesondere die dielektrische Konstante und/oder die Dicke des Mediums durch die Auswertung ermitteln.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Kreissäge mit einem Sägeblatt und einer Eingabe-/Ausgabeeinheit in einer Seitenansicht,
- Fig. 2: die Kreissäge mit einer Signaleinheit in einer Draufsicht,
- Fig. 3: eine schematische Darstellung der Signaleinheit,
- Fig. 4: ein von der Signaleinheit erzeugtes breitbandiges Signal in einer Amplitude-Zeit-Darstellung,
- Fig. 5: das Signal in einer Amplitude-Frequenz-Darstellung,
- Fig. 6: eine Datenbank der Signaleinheit,
- Fig. 7: die Kreissäge mit einer alternativen Signaleinheit,
- Fig. 8: eine schematische Darstellung der Signaleinheit aus Figur 7,
- Fig. 9: das Festlegen eines Tastverhältnisses für ein Sendesignal der Signaleinheit aus Figur 7,
- Fig. 10: eine stufenweise Frequenzmodulation für ein Sendesignal der Signaleinheit aus Figur 7 und
- Fig. 11: die Ermittlung der dielektrischen Konstante eines Werkstücks.

### Beschreibung der Ausführungsbeispiele

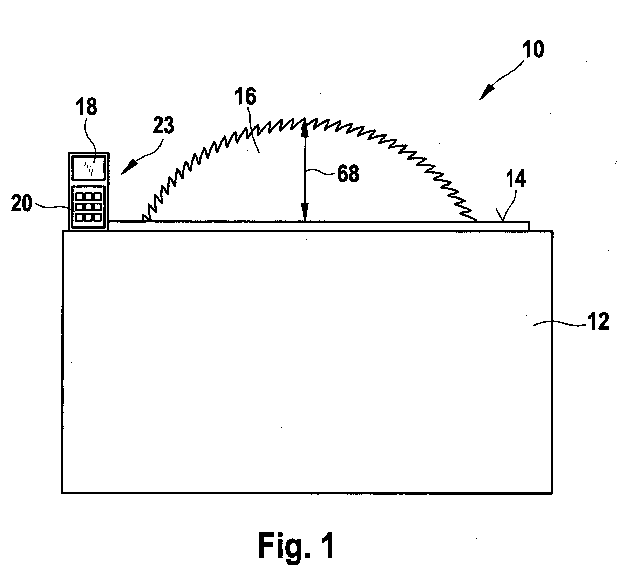

Figur 1 zeigt eine als Kreissäge 10 ausgebildete Werkzeugmaschine. Diese weist ein Gehäuse 12, eine Arbeitsfläche 14 zum Aufstellen eines zu sägenden Werkstücks, ein Sägeblatt 16, eine Ausgabeeinheit 18 mit einem LCD-Display und eine Eingabeeinheit 20 auf.

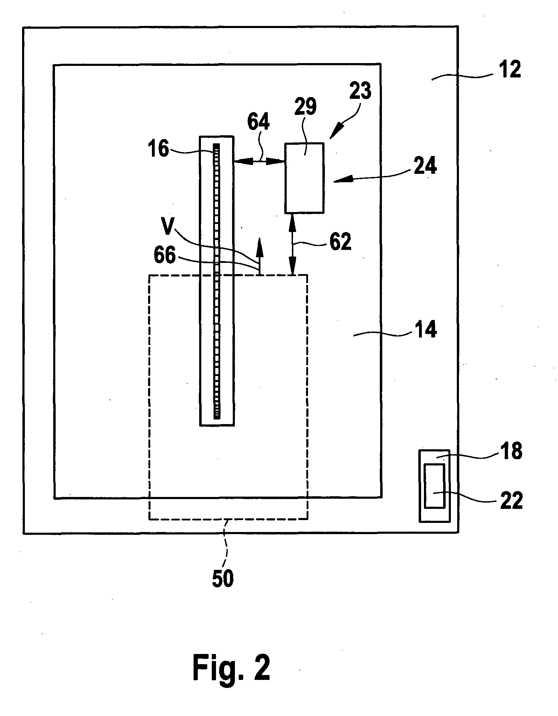

In Figur 2 ist die Kreissäge 10 in einer Draufsicht dargestellt. Zu erkennen sind das Gehäuse 12, die Arbeitsfläche 14, die Ausgabeeinheit 18 und das Sägeblatt 16. Die Ausgabeeinheit 18 ist mit einem Lautsprecher 22 versehen. Die Eingabeeinheit 20 und die Ausgabeeinheit 18 sind Teile einer Werkzeugmaschinenüberwachungsvorrichtung 23, welche außerdem eine ultrabreitbandige Signaleinheit 24 aufweist.

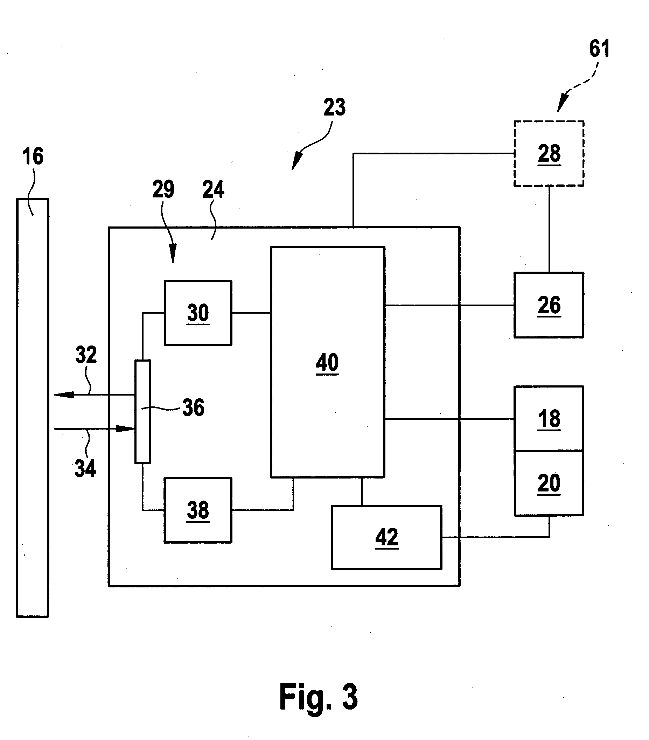

Mittels der Signaleinheit 24 können verschiedene Überwachungsfunktionen bei einer Bearbeitung eines Werkstücks realisiert werden. Der Aufbau und die Funktionsweise der Signaleinheit 24 sind in Figur 3 erläutert.

Figur 3 zeigt die Werkzeugmaschinenüberwachungsvorrichtung 23 mit der Signaleinheit 24, der Eingabeeinheit 20, der Ausgabeeinheit 18 und einer Regelungseinheit 26. Ferner ist eine Steuereinheit 28 der Kreissäge 10 gestrichelt dargestellt. Die Signaleinheit 24 weist einen Ultrabreitband-Radarsensor 29 mit einer Sendeinheit 30 auf, die zur Erzeugung eines ultrabreitbandigen Sendesignals 32 vorgesehen ist. Zum Senden des Sendesignals 32 und zum Empfangen eines Empfangssignals 34 ist der Ultrabreitband-Radarsensor 29 mit einem ultrabreitbandigen Antennenelement 36 versehen. Das Antennenelement 36 ist relativ zur Arbeitsfläche 14 fest angeordnet. Alternativ zum Antennenelement 36 kann die Signaleinheit 24 eine Kondensatoreinheit aufweisen. Hierzu kann eine Kondensatoranordnung - z.B. zwischen einer metallischen Fläche und dem Sägeblatt 16 - einfach gebildet werden. Nach einem Empfangen des Empfangssignals 34 wird dieses in einer Signalaufbereitungseinheit 38 gefiltert, verstärkt, in eine digitale Form umgewandelt und anschließend auf eine Recheneinheit 40 zur Verarbeitung gegeben. Die Signaleinheit 24 weist ferner eine Speichereinheit 42 auf, in der eine Datenbank 44 mit Überwachungsinformationen gespeichert wird. Diese Datenbank 44, deren Funktion unten beschrieben wird, kann mit Hilfe der Eingabeeinheit 20 von einem Bediener der Kreissäge 10 programmiert werden.

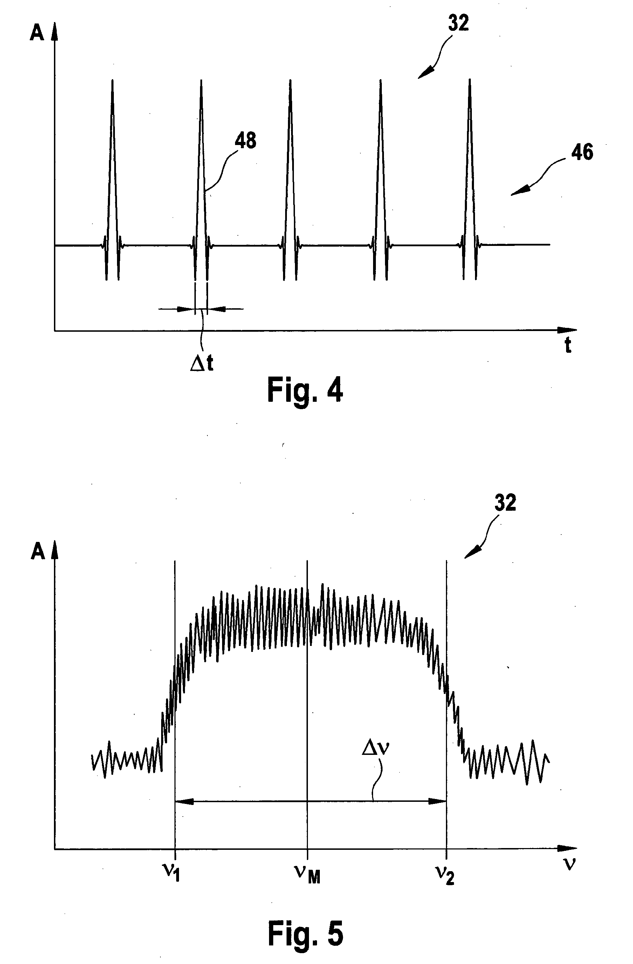

Die Erzeugung eines ultrabreitbandigen Signals ist anhand von den Figuren 4 und 5 erläutert. In Figur 4 ist eine Amplitude A des Sendesignals 32 auf der Y-Achse und die Zeit t auf der X-Achse aufgetragen. Das Sendesignal 32 weist eine Folge 46 von Pulsen 48 auf, wobei die Pulse 48 jeweils mit einer Pulsdauer Δt von 0,5 ns übertragen werden und regelmäßig aufeinander folgen. Mit der Pulsdauer Δt ist eine Signalbandbreite Δν des Sendesignals 32 verbunden, die in Figur 5 zu sehen ist. In dieser Figur ist das Spektrum des Sendesignals 32 dargestellt, wobei die Amplitude A auf der Y-Achse und eine Frequenz ν auf der X-Achse aufgetragen ist. Das Sendesignal 32 wird mit einer Mittenfrequenz ν_{M} von 5 GHz und einer Signalbandbreite Δν von 2 GHz um diese Mittenfrequenz ν_{M} übertragen. Dabei beträgt eine Unterfrequenz ν₁ = 4 GHz und eine Oberfrequenz ν₂ = 6 GHz. Alternativ zur Erzeugung von Pulsen 48 sind weitere, dem Fachmann als sinnvoll erscheinende Erzeugungsverfahren von ultrabreitbandigen Signalen denkbar. Das Sendesignal 32 wird außerdem mit einer Sendeleistung unter -45 dBm übertragen, so dass unerwünschte Interferenzen mit weiteren Funkeinheiten vermieden werden können.

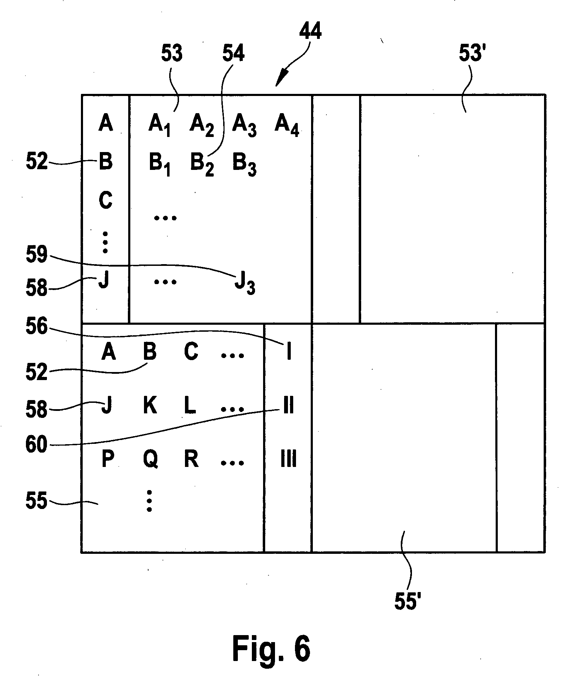

Es wird angenommen, dass ein Bediener ein Sägen eines Werkstücks 50, welches in Figur 2 gestrichelt dargestellt ist, durchführen will. Hierzu wird das Werkstück 50 auf die Arbeitsfläche 14 aufgestellt. Diese Anwendungssituation wird als Anwendungssituation 52 bezeichnet. Das Aufstellen des Werkstücks 50 induziert eine Änderung des die Signaleinheit 24 umgebenden Dielektrikums, welche sich in einer Änderung des Empfangssignals 34 widerspiegelt. Beispielsweise ist nach dem Aufstellen eine Resonanzfrequenz im Frequenzspektrum des Empfangssignals 34 verschoben. Die Recheneinheit 40 kann diesem erfassten Empfangssignal 34 die Anwendungssituation 52 zuordnen. Dies erfolgt mittels der Datenbank 44, die in Figur 6 dargestellt ist. In der Datenbank 44 sind in einer Zuordnungstabelle 53 Signalmuster, z.B. A₃, B₂ usw., jeweils einer Anwendungssituation A bzw. B usw. zugeordnet. Es sei im betrachteten Beispiel angenommen, dass die Anwendungssituation 52, welche von der Recheneinheit zu erkennen ist, dem Eintrag B in der Datenbank entspricht. Ausgehend vom erfassten Empfangssignal 34 untersucht die Recheneinheit 40 eine Korrelation zwischen dem Empfangssignal 34 und den Signalmustern, bis ein Signalmuster 54, welches die größte Korrelation mit dem erfassten Empfangssignal 34 aufweist, bestimmt wird. Im betrachteten Beispiel wird angenommen, dass dieses Signalmuster 54 dem Eintrag B₂ in der Datenbank 44 entspricht. Die Bestimmung des Signalmusters 54 wird mittels einer Methode der Fuzzy-Logik (unscharfe Logik) durchgeführt. In der Datenbank sind in einer weiteren Zuordnungstabelle 55 Anwendungssituationen A, B, C usw. Vorgehensweisen I, II, III usw. für die Werkstückbearbeitung zugeordnet. Wenn eine Anwendungssituation von der Recheneinheit 40 erkannt wird, kann auf diese Anwendungssituation reagiert werden, indem die Steuereinheit 28, welche mit der Recheneinheit 40 verbunden ist, dem Vorgehen entsprechend einen Verlauf der Werkstückbearbeitung ggf. modifiziert. Im betrachteten Beispiel ist die Anwendungssituation 52 einem Vorgehen 56 zugeordnet, das in der Datenbank dem Eintrag I entspricht. Bei diesem Vorgehen 56 wird der Betrieb der Kreissäge 10 ungeändert fortgesetzt.

Die Signaleinheit 24 dient außerdem zur Materialunterscheidung. Durch die Auswertung des Frequenzspektrums des Empfangssignals 34 kann zwischen verschiedenen Materialarten, wie insbesondere Holz, Metall oder Kunststoffen, unterschieden werden. Das Auflegen eines Werkstücks aus einem bestimmten Material wird als Anwendungssituation in der Datenbank 44 eingetragen.

Die Signaleinheit 24 ist mittels dieser spektralen Auswertung des Empfangssignals 34 ferner zur Erkennung von menschlichem oder tierischem Gewebe ausgelegt. Hiermit kann eine Unterscheidung zwischen einem zu bearbeitenden Material und einem menschlichen oder tierischem Gewebe getroffen werden. Es wird hierbei angenommen, dass ein Finger des Bedieners dem Sägeblatt 16 angenähert wird. Dies widerspiegelt sich im Spektrum des Empfangssignals 34 durch multiple Resonanzfrequenzen, die das menschliche Gewebe charakterisieren. Diese Anwendungssituation ist als Anwendungssituation 58 bezeichnet, die von der Recheneinheit 40 anhand des erfassten Empfangssignals 34 durch die Bestimmung eines korrelierten Signalmusters 59 erkannt wird. In der Datenbank 44 ist der Anwendungssituation 58 ein Vorgehen 60 zugeordnet, bei dem eine Sicherheitsmaßnahme eingeleitet wird. Hierzu weist die Werkzeugmaschinenüberwachungsvorrichtung 23 eine Aktorikeinheit 61 auf, die in Wirkverbindung mit der Signaleinheit 24 steht. Diese Aktorikeinheit 61 ist im betrachteten Beispiel von der Steuereinheit 28 gebildet. Durch die Erkennung der Anwendungssituation 58 wird von der Signaleinheit 24 ein Signal an die Aktorikeinheit 61 übertragen, die anhand von diesem ein Sicherheitsabschalten des Betriebs der Kreissäge 10 betätigt. Es sind weitere Ausführungen der Aktorikeinheit 61 denkbar. Beispielsweise kann die Aktorikeinheit 61 zum Antreiben von Sicherheitsmitteln vorgesehen sein, die zu einem Bremsen, einem Bedecken und/oder zu einem Entfernen des Sägeblatts 16 aus einer Gefahrenzone, wie z.B. durch ein Versenken in das Gehäuse 12, dienen.

Ferner können weitere Signalmuster für die Erkennung von Anwendungssituationen in Betracht genommen werden. Als Signalmuster kann z.B. eine bestimmte Verschiebungsgeschwindigkeit einer Resonanzfrequenz im Spektrum des Empfangssignals 34 betrachtet werden, wobei eine "langsame" und eine "schnelle" Verschiebung jeweils einer Anwendungssituation zugeordnet werden können.

Mittels der Eingabeeinheit 20 kann ein Bediener eine Konfiguration der Datenbank 44 durchführen. Der Bediener kann insbesondere die Datenbank 44 an neue Anwendungen der Kreissäge 10 anpassen, z.B. bei dem Einsatz von weiteren Sägemitteln oder neuartigem Zubehör, und/oder er kann neue Vorgehensweisen einstellen, die bestimmten Anwendungssituationen zugeordnet sind. Es können Einträge in den Zuordnungstabellen 53 und 55 modifiziert werden, und/oder es können neue Zuordnungstabellen 53' und 55' geschaffen werden. Zur Erweiterung der Datenbank 44 mit neuen Anwendungssituationen und neuen Vorgehensweisen für diese Anwendungssituationen ist ein Lernmodus der Kreissäge 10 vorgesehen. In diesem Modus können Anwendungssituationen von dem Bediener absichtlich geschaffen werden, wobei die Recheneinheit 40 selbständig lernen kann, solche Anwendungssituationen zu erkennen und zu ermitteln, welche Vorgehensweisen diesen Anwendungssituationen angepasst sind. Dabei lernt die Recheneinheit 40, diese Anwendungssituationen jeweils mit einem oder mehreren Signalmustern zu korrelieren. Hierzu arbeitet die Recheneinheit 40 in diesem Modus auf der Basis einer neuronalen Logik, die eine solche Selbstlernfunktion erlaubt. Dabei kann der Bediener ein Sicherheitsniveau jederzeit einstellen, bis ein gewünschtes Vorgehen für eine bestimmte Anwendungssituation erreicht ist. Dieses kann automatisch in der Datenbank 44 gespeichert werden.

Mittels der Recheneinheit 40 kann ferner ein Abstand bestimmt werden. Hierzu kann die Recheneinheit 40 eine Laufzeit zwischen der Erzeugung des Sendesignals 32 und dem Empfang des Empfangssignals 34 erfassen, wie z.B. durch Durchführung eines Phasenvergleichs zwischen dem Sendesignal 32 und dem Empfangssignal 34. Bei der Werkstückbearbeitung werden ein Abstand 62 zum Werkstück 50 sowie ein Abstand 64 zum Sägeblatt 16 bestimmt. Durch die Bestimmung des Abstands 62 kann ein Arbeitsfortschritt bei der Bearbeitung des Werkstücks 50 überwacht werden. Körperverletzungen aufgrund einer Unwucht des Sägeblatts 16 können durch eine Überwachung des Abstands 64 vermieden werden, indem anormale Schwingungen des Sägeblatts 16 erkannt werden und eine Reduktion der Drehzahl des Sägeblatts 16 von der Steuereinheit 28 durchgeführt wird. Durch eine Auswertung von Frequenz- und/oder Phasenverschiebungen zwischen dem Sendesignal 32 und dem Empfangssignal 34 kann eine Geschwindigkeit V, mit der das Werkstück 50 in Arbeitsrichtung 66 geschoben wird, überwacht werden. Diese Information kann ebenfalls zur Überwachung des Werkstückbearbeitungsfortschritts dienen. Zusätzlich können verschiedene Arbeitsphasen einer Werkstückbearbeitung definiert werden, wobei bestimmte Überwachungsfunktionen an diese Arbeitsphasen angepasst werden. In der Startphase nach dem Aufstellen des Werkstücks 50 kann insbesondere die Position des Werkstücks 50 relativ zum Sägeblatt 16 überwacht werden. Am Ende der Werkstückbearbeitung können insbesondere die Überwachungskriterien einer Fingerposition relativ zum Sägeblatt 16 verschärft werden.

Ferner können durch die Eingabeeinheit 20 Arbeitsparameter für eine Werkstückbearbeitung eingestellt werden, wie z.B. eine Drehzahl des Sägeblatts, eine Sägetiefe 68 (Figur 1), ein Typ eines Sägeblatts usw. Arbeitsparameter, z.B. die Sägetiefe 68, die von der Werkzeugmaschinenüberwachungsvorrichtung 23 überwacht werden, können durch die Regelungseinheit 26 auf einem von dem Bediener eingestellten Wert gehalten werden. Mittels der Ausgabeeinheit 18 kann der Bediener über die überwachten Arbeitsparameter informiert werden. Diese können auf dem LED-Display angezeigt werden. Wenn ein Arbeitsparameter eine voreingestellte Schwelle erreicht und/oder bei bestimmten Anwendungssituationen, z.B. bei einem verkehrten Aufstellen eines Werkstücks, kann der Bediener mittels eines akustischen Signals, das über den Lautsprecher 22 übertragen wird, informiert werden. Durch eine Auswertung des ultrabreitbandigen Empfangssignals 34 ist eine Messung und/oder Überwachung von weiteren Arbeitsparametern denkbar, wie z.B. einer Dimension, eines Feuchtigkeitsgrads eines Werkstücks usw.

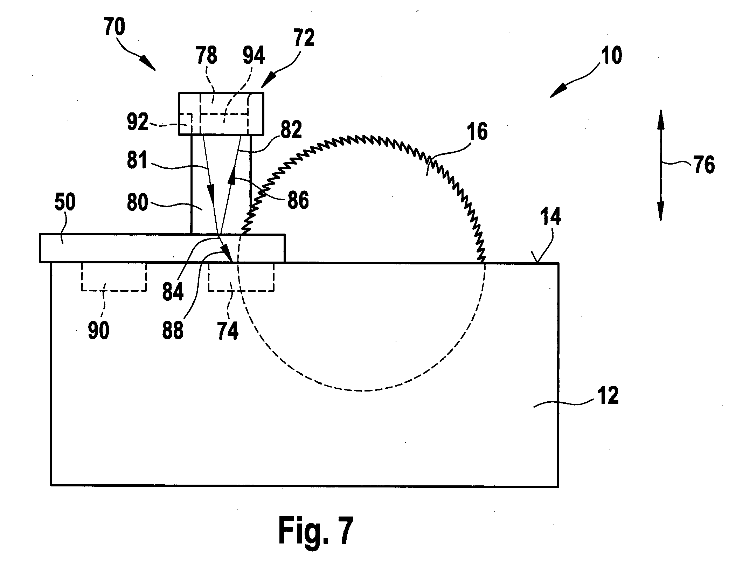

Figur 7 zeigt die als Kreissäge 10 ausgebildete Werkzeugmaschine mit einer weiteren Ausführung einer Werkzeugmaschinenüberwachungsvorrichtung 70. Wie im obigen Ausführungsbeispiel weist die Werkzeugmaschinenüberwachungsvorrichtung 70 eine Signaleinheit 72 auf, die für einen Ultrabreitbandbetrieb vorgesehen ist. Die Signaleinheit 72 umfasst einen ersten Ultrabreitband-Radarsensor 74, welcher in der in Figur 7 dargestellten Grundeinbaustellung der Kreissäge 10 unterhalb der horizontal ausgerichteten Arbeitsfläche 14 zum Auflegen des Werkstücks 50 angeordnet ist. Hierbei ist der Ultrabreitband-Radarsensor 74 innerhalb des Gehäuses 12, welches vorzugsweise als Kunststoffgehäuse ausgebildet ist, für einen Endbediener unsichtbar angeordnet und durch die Arbeitsfläche 14 in vertikaler Richtung nach oben bedeckt. Durch diese versteckte Anordnung können unerwünschte Manipulationen des Endbedieners vorteilhaft vermieden werden. Die Signaleinheit 72 weist ferner einen weiteren Sensor 78 auf, der ebenfalls als Ultrabreitband-Radarsensor ausgebildet ist. Dieser Sensor 78 ist in der Grundeinbaustellung der Kreissäge 10 oberhalb der Arbeitsfläche 14 angeordnet. Hierbei ist die Projektion des Sensors 78 in vertikaler Richtung 76 auf die Arbeitsfläche 14 in der Arbeitsfläche 14 eingebettet. Zusammenfassend sind der Ultrabreitband-Radarsensor 74 und der weitere Sensor 78 in der Grundeinbaustellung der als Kreissäge 10 ausgebildeten Werkzeugmaschine beiderseits der Arbeitsfläche 14 angeordnet. Hierbei sind der Sensor 78 und der Ultrabreitband-Radarsensor 74 durch die Arbeitsfläche 14 voneinander getrennt. Der Sensor 78 ist mittels einer Haltevorrichtung 80 in seiner die Arbeitsfläche 14 überstehenden Position gehalten.

Hier und im gesamten Text beziehen sich die Begriffe "oben, unten, oberhalb, unterhalb" usw. auf die in den Figuren 1 und 7 gezeigte Grundeinbaustellung der Kreissäge 10.

Im betrachteten Beispiel der Figur 7 wird von dem Sensor 78 ein Sendesignal 81 nach unten in Richtung auf die Arbeitsfläche 14 abgestrahlt. An der Schnittstelle zwischen Luft und dem Medium des Werkstücks 50 kann abhängig vom Material des Werkstücks 50 ein Signalanteil 82 reflektiert werden und/oder es kann ein Signalanteil 84 durch das Medium des Werkstücks 50 transmittiert werden. Der Signalanteil 82 weist eine Strahlrichtung 86 auf, die eine nach oben gerichtete vertikale Komponente aufweist. Der Signalanteil 82 wird hierbei mittels des Sensors 78 erfasst. Der Signalanteil 84 weist eine Strahlrichtung 88 auf, die eine nach unten gerichtete vertikale Komponente aufweist. Der Signalanteil 84 wird hierbei nach einer Transmission durch das Medium des Werkstücks 50 mittels des unterhalb der Arbeitsfläche 14 angeordneten Ultrabreitband-Radarsensors 74 erfasst. Zusammenfassend bilden der Ultrabreitband-Radarsensor 74 und der weitere Sensor 78 ein Sensorsystem, das zur Erfassung von zumindest den Signalanteilen 82, 84 ausgelegt ist, die aufgrund einer Reflexion auf das Werkstück 50 bzw. einer Transmission durch das Werkstück 50 zwei unterschiedliche Strahlrichtungen 86, 88 aufweisen.

In der gezeigten Ausführung sind der Ultrabreitband-Radarsensor 74 und der weitere Sensor 78 jeweils zum Senden und zum Empfangen eines Signals vorgesehen. Es ist hierbei denkbar, dass das Sendesignal 81 alternativ oder zusätzlich vom Ultrabreitband-Radarsensor 74 gesendet wird, wobei ein auf das Werkstück 50 reflektierter Signalanteil wieder vom Ultrabreitband-Radarsensor 74 erfasst wird und ein durch das Werkstück 50 transmittierter Signalanteil vom Sensor 78 empfangen wird. In einer alternativen Ausführung ist denkbar, dass der Sensor 78 lediglich zum Senden ausgelegt ist und dass die Signaleinheit 72 zusätzlich einen weiteren Sensor oberhalb der Arbeitsfläche 14 aufweist, und zwar insbesondere einen Sensor, der zum Empfangen eines auf das Werkstück 50 reflektierten Anteils des Sendesignals 81 ausgelegt ist. Hierbei kann der Ultrabreitband-Radarsensor 74 lediglich zum Empfangen eines durch das Werkstück 50 transmittierten Anteils des Sendesignals 81 ausgelegt sein. Grundsätzlich kann die obige und die folgende Beschreibung für den Fall entsprechende Anwendung finden, in welchem der Ultrabreitband-Radarsensor 74 und der Sensor 78 miteinander ausgetauscht sind.

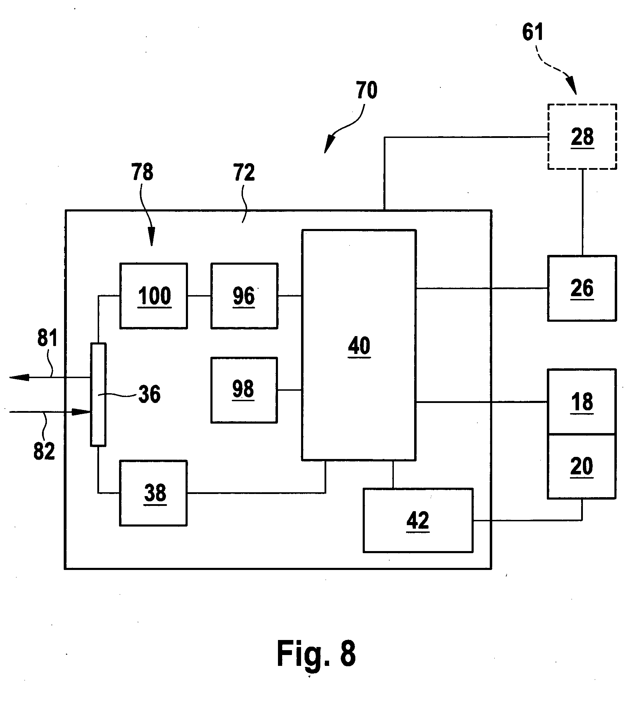

Die Werkzeugmaschinenüberwachungsvorrichtung 70 weist zusätzlich zu dem von dem Ultrabreitband-Radarsensor 74 und dem weiteren Sensor 78 gebildeten Sensorsystem einen weiteren Sensor 90 auf. Dieser Sensor 90 ist insbesondere als kapazitiver Sensor ausgebildet. Alternativ kann der Sensor 90 als induktiver oder als mechanischer Sensor ausgebildet sein. Er kann die Anwesenheit des Werkstücks 50 auf der Arbeitsfläche 14 und/oder eines Körperteils des Bedieners in der Gefahrenzone des Sägeblatts 16 detektieren und unterstützt hierbei das oben beschriebene Sensorsystem in dessen Überwachungsfunktion. Der Sensor 90 kann z.B. zur Vermeidung von Fehlauslösungen der mit der Signaleinheit 72 in Wirkverbindung stehenden Aktorikeinheit 61 (siehe Figur 8) zur Durchführung einer Sicherheitsmaßnahme, wie z.B. der Steuereinheit 28, herangezogen werden. Hierbei kann beispielsweise ein Auslösen der Aktorikeinheit 61 erst beim Vorliegen eines Erkennungssignals des Sensorsystems und des Sensors 90 erfolgen.

In der gezeigten Ausführung weist die Werkzeugmaschinenüberwachungsvorrichtung 70 einen weiteren Sensor 92 auf, welcher zur Erfassung einer Infrarotstrahlung vorgesehen ist. Mit dem Sensor 92 kann das Vorhandensein von menschlichem Gewebe in einer Gefahrenzone der Kreissäge 10 anhand der Erfassung einer Temperaturkenngröße erkannt werden. Außerdem kann mittels des Sensors 92 die Temperatur eines Sägeschnitts erfasst werden. In einem weiteren Ausführungsbeispiel ist denkbar, dass der Sensor 92 als Bilderfassungseinheit, wie z.B. als Videokamera, ausgebildet ist, die das ultrabreitbandige Sensorsystem der Signaleinheit 72 in einer Materialunterscheidung, insbesondere in der Erkennung des Vorhandenseins von menschlichem Gewebe in einem überwachten Bereich, unterstützt. Ein kombinierter Einsatz eines Infrarotsensors und einer Bilderfassungseinheit ist ebenfalls denkbar. Der Sensor 92 kann ebenfalls als redundanter Erkennungssensor zur Vermeidung von Fehlauslösungen der Aktorikeinheit 61 genutzt werden.

Die gezeigte Ausführung mit zwei zu dem ultrabreitbandigen Sensorsystem zusätzlichen Sensoren 90 und 92 ist beispielhaft. Eine Ausbildung der Werkzeugmaschinenüberwachungsvorrichtung 70 mit dem Sensorsystem und lediglich einem zusätzlichen Sensor 90 oder 92 ist denkbar. Die Signaleinheit 72 weist ferner eine Einheit 94 auf, die ebenfalls optional eingesetzt werden kann und dazu dient, das von der Signaleinheit 72 emittierte Sendesignal 81 zu bündeln. Damit kann die Überwachung eines Bereichs der Kreissäge 10 erreicht werden, der gezielt auf eine potentielle Gefahrenzone abgegrenzt ist. Die Einheit 94 weist hierzu vorzugsweise zumindest ein Linsenelement auf, das speziell auf das Umlenken von elektromagnetischen Wellen im Radarbereich ausgelegt ist. Dieses Linsenelement kann insbesondere als eine Linse, insbesondere ein gewölbtes Bauteil, aus Kunststoff ausgebildet sein, die einen besonderen Übergangswert zwischen den dielektrischen Konstanten von Luft und Kunststoff zum Umlenken einer Strahlung im gewünschten Wellenlängenbereich nutzt. Das Linsenelement kann insbesondere einstückig mit einem Gehäuse des Sensors 78 ausgebildet sein. Das Sendesignal 81 kann ferner gezielt auf eine potentielle Gefahrenzone durch eine spezielle Ausrichtung der Antenne des Sensors 78 gerichtet sein. Ist der Ultrabreitband-Radarsensor 74 bzw. der Sensor 78 als Antennenarray ausgebildet, kann eine Bündelung eines abgestrahlten Signals erreicht werden, wenn ein Phasenverschiebemittel vorgesehen ist, das zum Steuern der relativen Phasenlagen zwischen den einzelnen Antennenelementen 36 steuert. Mittels der Einheit 94 kann ferner nach einer Erkennung eines menschlichen Körperteils, wie z.B. eines Fingers, in einer Gefahrenzone eine Fokussierung auf diesen Körperteil sowie eine Verfolgung dieses Körperteils erfolgen.

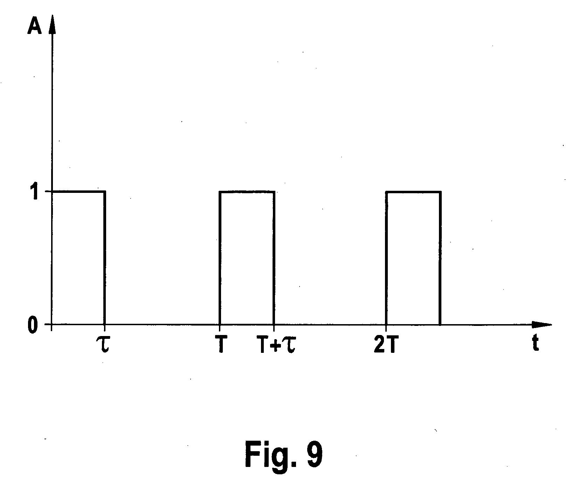

Die obige Beschreibung der Figur 3, die die Funktionsweise der Signaleinheit 24 mit dem Ultrabreitband-Radarsensor 29 betrifft, findet ebenfalls für die Signaleinheit 72 mit dem Sensor 78 entsprechende Anwendung. Dies ist in Figur 8 dargestellt. Hierbei werden Bauteile, die die gleiche Funktion aufweisen, mit dem gleichen Bezugszeichen versehen. Die folgende Beschreibung beschränkt sich auf die Unterschiede zur Ausführung aus Figur 3. Die Signaleinheit 72 weist ein Mittel 96 auf, das in einem Energiesparmodus ein Tastverhältnis für das Sendesignal 81 festlegt. Dies ist anhand der Figur 9 dargestellt. Ausgehend vom Zeitpunkt t=0 wird während einer Zeitdauer τ das Sendesignal 81, wie oben beschrieben, erzeugt, wie z.B. mittels einer Folge von Pulsen kurzer Pulsdauer. Nach der Zeit τ und bis zu einem Zeitpunkt t=T, d.h. während einer Zeitdauer T-τ, wird ein Senden des Sendesignals 81 gesperrt. Ab dem Zeitpunkt t=T wird der Zyklus jeweils mit der Periode T wiederholt, indem das Sendesignal 81 für eine Zeitdauer τ wieder freigegeben wird usw. Durch das Mittel 96 kann das Tastverhältnis τ/T bzw. (T-τ)/T eingestellt werden. Insbesondere wird das Tastverhältnis derart eingestellt, dass vorgeschriebene Werte der elektromagnetischen Verträglichkeit (EMV) eingehalten werden und trotzdem eine ausreichende Sicherheit erreicht wird. Um einen Energieverbrauch gering zu halten, kann die Signaleinheit 72 erst aktiviert werden, wenn die Kreissäge 10 eingeschaltet ist und/oder ein manuelles Starten eines Antriebs des Sägeblatts 16 erfolgt und/oder das Vorhandensein des Werkstücks 50 mittels des Sensors 90 erkannt wird.

Ferner ist die Signaleinheit 72 mit einer weiteren Einheit 98 versehen, die zur Durchführung einer "Listen-Before-Talk" Funktion vorgesehen ist. Vor einem Starten eines Antriebs des Sägeblatts 16 und eines Überwachungsbetriebs der Signaleinheit 72 wird mittels der Einheit 98 der Nutzfrequenzbereich des Sensors 78 auf weitere Dienste, wie z.B. einen GSM- oder UMTS-Dienst, abgesucht. Wird ein derartiger Fremddienst erkannt, so können Maßnahmen getroffen werden, die zum Schützen des Fremddiensts bzw. der Signaleinheit 72 vorgesehen sind.

Die Werkzeugmaschinenüberwachungsvorrichtungen 23, 70 können mit Vorteil bei weiteren stationären Werkzeugmaschinen eingesetzt werden, wie z.B. Bandsägen, Kappsägen, Hobeln usw. Des Weiteren ist ein Einsatz der Werkzeugmaschinenüberwachungsvorrichtung bei handgeführten Werkzeugmaschinen, wie z.B. Kreissägen, Stichsägen, Kettensägen usw., ebenfalls denkbar. Dabei kann die Werkzeugmaschinenüberwachungsvorrichtung durch die Signaleinheit einen vorteilhaften Schutz bei kritischen Anwendungssituationen, wie z.B. einem Hochschlagen einer handgeführten Kreissäge, bieten.

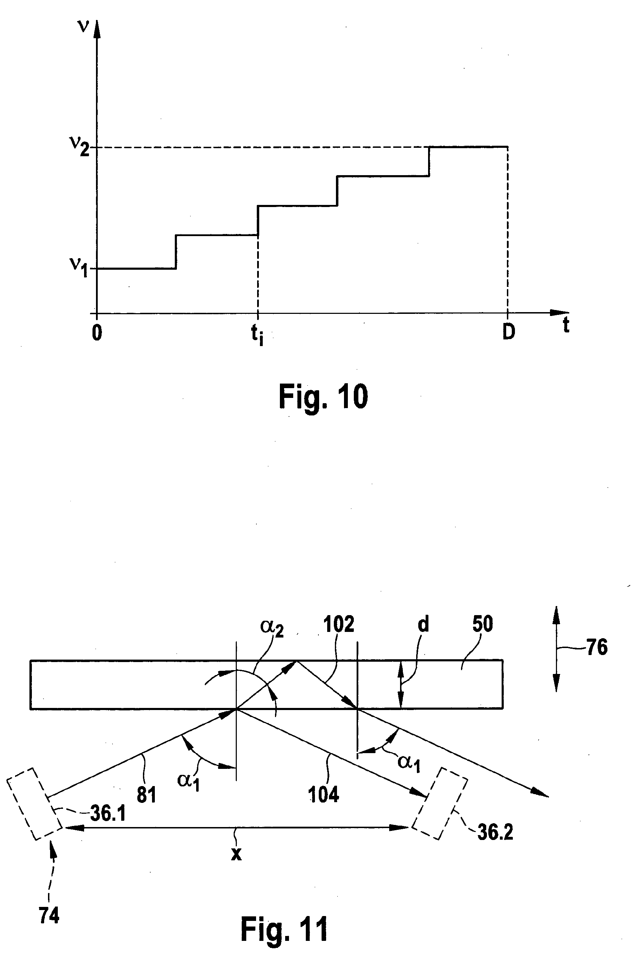

Figur 10 stellt die Herstellung des vom Sensor 78 gesendeten Sendesignals 81 dar. Die Signaleinheit 72 weist eine Sendeeinheit 100 auf, die zur Erzeugung des Sendesignals 81 mittels einer stufenweisen Frequenzmodulation vorgesehen ist. Das in Figur 10 gezeigte Diagramm stellt die Frequenz ν des Sendesignals 81 als Funktion der Zeit t während einer Zeitsequenz von Dauer D. Während der gezeigten Sequenz, welche wiederholt wird, wird die Frequenz ν über den ultrabreitbandigen Frequenzbereich, der durch die Unterfrequenz ν₁ und die Oberfrequenz ν₂ gespannt ist, stufenweise geändert, insbesondere stufenweise erhöht, indem die Frequenz ν zu diskreten Zeitpunkten tᵢ inkrementiert wird. Dies erfolgt mittels eines nicht näher steuerbaren Oszillators, dessen Ausgangsfrequenz inkrementiert wird.

In einer weiteren Ausführungsvariante ist denkbar, dass der Ultrabreitband-Radarsensor 74 bzw. der Sensor 78 mehrere Antennenelemente 36 aufweist, die z.B. in einer Arrayanordnung ausgelegt sind. Beispielsweise kann eine Arrayanordnung vorgesehen sein, in welcher Antennenelemente 36 beiderseits der Bewegungsebene, und zwar der Rotationsebene, des als Sägeblatt 16 ausgebildeten Werkzeugs angeordnet sind, wodurch ein Überwachungsbereich seitlich des Werkzeugs festgelegt werden kann.

Eine Ausführung der Signaleinheit 72, in welchem der Ultrabreitband-Radarsensor 74 mehrere Antennenelemente 36.1, 36.2 aufweist, die unterhalb der Arbeitsfläche 14 angeordnet sind, ist in Figur 11 gezeigt. In diesem Beispiel wird von einem ersten Antennenelement 36.1 das Sendesignal 81 mit einer Richtung gesendet, die relativ zur horizontalen Arbeitsfläche 14 schräg ausgerichtet ist. Dies ermöglicht insbesondere die Bestimmung der dielektrischen Konstante eines auf der Arbeitsfläche 14 aufgelegten Mediums, insbesondere des Werkstücks 50. Die Senderichtung des das Sendesignal 81 sendenden Antennenelements 36.1 bildet in einer vertikalen Ebene, die der Zeichnungsebene entspricht, einen Winkel α₁ mit der Normale zur Werkstückoberfläche. Ein Teil des Sendesignals 81 wird an einer ersten Schnittstelle zwischen Luft und Werkstück 50 reflektiert, während ein Teil durch das Werkstück 50 transmittiert wird. Hierbei bildet der transmittierte Strahl einen Winkel α₂ mit der gleichen Normale zur Werkstückoberfläche. Dieser transmittierte Strahlungsanteil 102 wird an einer zweiten Schnittstelle des Werkstücks 50 zur Luft reflektiert. Aufgrund der gewählten Position des Antennenelements 36.2 relativ zum Antennenelement 36.1, und zwar beispielsweise des horizontalen Abstands X des Antennenelements 36.2 zum Antennenelement 36.1 wird lediglich der Strahlungsanteil 104 erfasst, der an der ersten Schnittstelle reflektiert wird. Hierdurch kann der Reflexionsfaktor des Mediums des Werkstücks 50 bestimmt werden. Mittels der Bestimmung des Reflexionsfaktors bei unterschiedlichen Polarisationen des Sendesignals 81 kann die dielektrische Konstante des Mediums des Werkstücks 50 ermittelt werden. Dies wird mittels der Recheneinheit 40 der Signaleinheit 72 ermittelt. Es ist ferner möglich, das Antennenelement 36.2 in einer horizontalen Richtung derart zu verschieben, d.h. den Abstand X derart zu wählen, dass das Antennenelement 36.2 den Strahlungsanteil 102 erfasst, der an der zweiten Schnittstelle reflektiert wird. Durch die Bestimmung des Verschiebabstands können der Winkel α₂ und daher die Dicke d des Werkstücks 50 ermittelt werden. Dies wird wiederum mithilfe der Recheneinheit 40 der Signaleinheit 72 ermittelt. Alternativ oder zusätzlich ist die Ausbildung des Antennenelements 36.2 mit einem Empfangswinkel denkbar, der die Erfassung beider Strahlungsanteile 102, 104 ermöglicht. Hierbei kann das Sendesignal 81 als gepulstes Sendesignal ausgebildet sein, wobei mittels einer Laufzeiterfassung des Sendesignals 81 zwischen den beiden Strahlungsanteilen unterschieden werden kann. Es ist ferner der Einsatz eines zusätzlichen Antennenelements 36 denkbar, das zur gezielten Erfassung des an der zweiten Schnittstelle reflektierten Strahlungsanteils 102 ausgelegt ist, wodurch wiederum zwischen den beiden Strahlungsanteilen 102, 104 unterschieden werden kann.

## Patentansprüche

1. Werkzeugmaschinenüberwachungsvorrichtung mit mindestens einer für einen Ultrabreitbandbetrieb vorgesehenen Signaleinheit (24; 72), wobei die Signaleinheit (24; 72) mindestens einen Ultrabreitband-Radarsensor (29; 74) aufweist, **dadurch gekennzeichnet, dass** die Signaleinheit (72) Mittel zur Ausführung einer Listen-Before-Talk Funktion, bei der ein Betriebsmodus der Werkzeugmaschinenüberwachungsvorrichtung den relevanten Nutzfrequenzbereich der Signaleinheit (24; 72) nach Fremddiensten, insbesondere Radio-, GSM-, UMTS- und / oder Flugradardiensten absucht, aufweist, um eine gegenseitige Störung der Signaleinheit (24; 72) mit Fremddiensten zu vermindern.

2. Werkzeugmaschinenüberwachungsvorrichtung nach Anspruch 1, **dadurch gekennzeichnet, dass** der mindestens eine Ultrabreitband-Radarsensor (74) in einer Werkzeugmaschinengrundeinbaustellung unterhalb einer Werkzeugmaschinenarbeitsfläche (14) zum Platzieren eines Werkstücks (50) angeordnet ist.

3. Werkzeugmaschinenüberwachungsvorrichtung nach einem der vorhergehenden Ansprüche, **gekennzeichnet durch** mindestens einen weiteren Sensor (78, 90, 92).

4. Werkzeugmaschinenüberwachungsvorrichtung nach Anspruch 3, **dadurch gekennzeichnet, dass** der mindestens eine weitere Sensor (90, 92) ein kapazitiver oder induktiver oder mechanischer oder optischer Sensor ist.

5. Werkzeugmaschinenüberwachungsvorrichtung nach einem der Ansprüche 3 oder 4, **dadurch gekennzeichnet, dass** der zumindest eine Ultrabreitband-Radarsensor (74) und der mindestens eine weitere Sensor (78) ein Sensorsystem bilden, das zur Erfassung eines Signalanteils (84), der durch ein zu bearbeitendes Werkstück (50) transmittiert wird, und eines Signalteils (82), der auf ein zu bearbeitendes Werkstück (50) reflektiert wird, ausgelegt ist.

6. Werkzeugmaschinenüberwachungsvorrichtung nach Anspruch 5, **gekennzeichnet durch** zumindest einen zu dem Sensorsystem zusätzlichen Sensor (90, 92).

7. Werkzeugmaschinenüberwachungsvorrichtung nach einem der vorhergehenden Ansprüche, **gekennzeichnet durch** eine Einheit (94), die zum Bündeln einer Strahlung der Signaleinheit (72) vorgesehen ist.

8. Werkzeugmaschinenüberwachungsvorrichtung nach einem der vorhergehenden Ansprüche, **dadurch gekennzeichnet, dass** die Signaleinheit (24; 72) eine Recheneinheit (40) umfasst, die dazu vorgesehen ist, einem erfassten Signal (34) eine Anwendungssituation (52, 58) durch eine auf einer unscharfen und/oder neuronalen Logik basierende Signalverarbeitung zuzuordnen.

9. Werkzeugmaschinenüberwachungsvorrichtung nach einem der vorhergehenden Ansprüche, **dadurch gekennzeichnet, dass** die Signaleinheit (24; 72) eine programmierbare Datenbank (44) aufweist, in der einer Anwendungssituation (52, 58) bei einem Bearbeitungsprozess ein Vorgehen (56, 60) zum Ändern des Bearbeitungsprozesses zugeordnet ist.

10. Werkzeugmaschinenüberwachungsvorrichtung nach einem der vorhergehenden Ansprüche, **dadurch gekennzeichnet, dass** die Signaleinheit (24; 72) zur Bestimmung eines Arbeitsfortschritts bei einer Werkstückbearbeitung vorgesehen ist.

11. Werkzeugmaschinenüberwachungsvorrichtung nach einem der vorhergehenden Ansprüche, **gekennzeichnet durch** eine elektronische Eingabeeinheit (20), die zur Eingabe von zumindest einer Überwachungsinformation vorgesehen ist.

12. Werkzeugmaschinenüberwachungsvorrichtung nach einem der vorhergehenden Ansprüche, **gekennzeichnet durch** eine Regelungseinheit (26), die zum Regeln von zumindest einem Parameter (68) eines Werkstückbearbeitungsprozesses vorgesehen ist.

13. Werkzeugsmaschinenüberwachungsvorrichtung nach einem der vorhergehenden Ansprüche, **dadurch gekennzeichnet, dass** die Signaleinheit (72) in zumindest einem Betriebsmodus zur Auswertung von zumindest einer Strahlung aus einer Gruppe von zumindest zwei Strahlungsanteilen (102, 104) dient, die aufgrund einer Reflexion eines Signals (81) an zumindest zwei Schnittstellen eines Mediums voneinander räumlich getrennt sind.

14. Werkzeugmaschine mit einer Werkzeugmaschinenüberwachungsvorrichtung nach einem der Ansprüche 1 bis 13.

## Claims

1. Machine-tool monitoring device having at least one signal unit (24; 72) which is intended for ultra-wideband operation, the signal unit (24; 72) having at least one ultra-wideband radar sensor (29; 74), **characterized in that** the signal unit (72) has means for carrying out a listen-before-talk function in which an operating mode of the machine-tool monitoring device searches the relevant useful frequency range of the signal unit (24; 72) for third-party services, in particular radio, GSM, UMTS and/or aviation radar services, in order to reduce mutual interference between the signal unit (24; 72) and third-party services.

2. Machine-tool monitoring device according to Claim 1, **characterized in that** the at least one ultra-wideband radar sensor (74) is arranged in a machine-tool basic installed position below a machine-tool working surface (14) for the placement of a workpiece (50).

3. Machine-tool monitoring device according to one of the preceding claims, **characterized by** at least one further sensor (78, 90, 92).

4. Machine-tool monitoring device according to Claim 3, **characterized in that** the at least one further sensor (90, 92) is a capacitive or inductive or mechanical or optical sensor.

5. Machine-tool monitoring device according to either of Claims 3 and 4, **characterized in that** the at least one ultra-wideband radar sensor (74) and the at least one further sensor (78) form a sensor system which is designed to detect a signal component (84) transmitted by a workpiece (50) to be machined and a signal part (82) which is reflected onto a workpiece (50) to be machined.

6. Machine-tool monitoring device according to Claim 5, **characterized by** at least one sensor (90, 92) which is additional to the sensor system.

7. Machine-tool monitoring device according to one of the preceding claims, **characterized by** a unit (94) which is intended to focus radiation from the signal unit (72).

8. Machine-tool monitoring device according to one of the preceding claims, **characterized in that** the signal unit (24; 72) comprises a computation unit (40) which is intended to assign a usage situation (52, 58) to a detected signal (34) by means of signal processing based on fuzzy and/or neural logic.

9. Machine-tool monitoring device according to one of the preceding claims, **characterized in that** the signal unit (24; 72) has a programmable database (44) in which, in a machining process, a procedure (56, 60) for changing the machining process is assigned to a usage situation (52, 58).

10. Machine-tool monitoring device according to one of the preceding claims, **characterized in that** the signal unit (24; 72) is intended to determine work progress during workpiece machining.

11. Machine-tool monitoring device according to one of the preceding claims, **characterized by** an electronic input unit (20) which is intended to input at least one item of monitoring information.

12. Machine-tool monitoring device according to one of the preceding claims, **characterized by** a control unit (26) which is intended to control at least one parameter (68) of a workpiece machining process.

13. Machine-tool monitoring device according to one of the preceding claims, **characterized in that,** in at least one operating mode, the signal unit (72) is used to evaluate at least radiation from a group of at least two radiation components (102, 104) which are spatially separate from one another on account of a signal (81) being reflected at at least two interfaces of a medium.

14. Machine tool having a machine-tool monitoring device according to one of Claims 1 to 13.

## Revendications

1. Ensemble de surveillance de machine-outil, présentant une unité (24; 72) de signalisation prévue pour fonctionner à bande ultra-large, l'unité (24; 72) de signalisation présentant au moins un capteur radar (29; 74) à bande ultra-large,
**caractérisé en ce que**
l'unité (72) de signalisation présente des moyens d'exécution d'une fonction "listen before talk" (écouter avant de parler) par laquelle un mode de fonctionnement de l'ensemble de surveillance de machine-outil cherche la plage concernée de fréquence utile de l'unité de signalisation (24 ; 72) sur des services extérieurs, notamment des services radio, GSM, UMTS et/ou radar de vol, en vue de diminuer les perturbations mutuelles entre l'unité (24; 72) de signalisation et les services extérieurs.

2. Ensemble de surveillance de machine-outil selon la revendication 1, **caractérisé en ce que** le ou les capteurs radar (74) à bande ultra-large sont disposés dans une position de montage de base dans la machine-outil située en dessous d'une surface de travail (14) de la machine-outil sur laquelle est placée une pièce (50) à traiter.

3. Ensemble de surveillance de machine-outil selon l'une des revendications précédentes, **caractérisé par** au moins un autre capteur (78, 90, 92).

4. Ensemble de surveillance de machine-outil selon la revendication 3, **caractérisé en ce que** le ou les autres capteurs (90, 92) sont des capteurs capacitifs, inductifs, mécaniques ou optiques.

5. Ensemble de surveillance de machine-outil selon les revendications 3 ou 4, **caractérisé en ce que** le ou les capteurs radar (74) à bande ultra-large et le ou les autres capteurs (78) forment un système de capteurs conçu pour détecter une partie (84) des signaux transmise par une pièce (50) à traiter et une partie (82) des signaux réfléchie par la pièce (50) à traiter.

6. Ensemble de surveillance de machine-outil selon la revendication 5, **caractérisé par** au moins un capteur (90, 92) en plus du système de capteurs.

7. Ensemble de surveillance de machine-outil selon l'une des revendications précédentes, **caractérisé par** une unité (94) prévue pour concentrer le rayonnement de l'unité de signalisation (72).

8. Ensemble de surveillance de machine-outil selon l'une des revendications précédentes, **caractérisé en ce que** l'unité de signalisation (24; 72) comporte une unité de calcul (40) prévue pour associer à un signal détecté (34) une situation d'application (52, 58) en traitant les signaux sur la base d'une logique floue et/ou d'une logique neuronale.

9. Ensemble de surveillance de machine-outil selon l'une des revendications précédentes, **caractérisé en ce que** l'unité de signalisation (24; 72) présente une base de données (44) programmable dans laquelle une procédure (56, 60) de modification d'une opération de traitement est associée à une situation d'application (52, 58) lors de cette opération de traitement.

10. Ensemble de surveillance de machine-outil selon l'une des revendications précédentes, **caractérisé en ce que** l'unité de signalisation (24; 72) est prévue pour déterminer la poursuite du travail lors du traitement d'une pièce.

11. Ensemble de surveillance de machine-outil selon l'une des revendications précédentes, **caractérisé par** une unité électronique d'introduction (20) prévue pour introduire au moins une information de surveillance.

12. Ensemble de surveillance de machine-outil selon l'une des revendications précédentes, **caractérisé par** une unité de régulation (26) prévue pour réguler au moins un paramètre (68) d'une opération de traitement d'une pièce.

13. Ensemble de surveillance de machine-outil selon l'une des revendications précédentes, **caractérisé en ce que** dans au moins un mode de fonctionnement, l'unité de signalisation (72) sert à évaluer au moins un rayonnement d'un ensemble formé d'au moins deux parties (102, 104) de rayonnement séparées spatialement d'une de l'autre du fait d'une réflexion d'un signal (81) sur au moins deux interfaces d'un fluide.

14. Machine-outil dotée d'un ensemble de surveillance de machine-outil selon l'une des revendications 1 à 13.
